# EUROPEAN PATENT SPECIFICATION

(11) **EP 3 453 014 B1**
(45) Date of publication and mention of the grant of the patent: **14.09.2022**
(21) Application number: 17721821.1
(22) Date of filing: 28.04.2017
(51) Int. Cl.: G09F 15/00, G09F 27/00, G09F 7/10, G09F 9/30

(54) **A DISPLAY UNIT**
ANZEIGEEINHEIT
UNITÉ D'AFFICHAGE

(30) Priority: 06.05.2016 GB 201607975
(43) Date of publication of application: 13.03.2019
(73) Proprietor: Urben Technologies Limited, St Albans, Hertfordshire AL3 6PH (GB)
(72) Inventor: ENTWISTLE, Michael, St Albans Hertfordshire AL3 6PH (GB); LI, Yun-Thai, St Albans Hertfordshire AL3 6PH (GB)
(74) Representative: Dolleymores
(86) International application number: PCT/GB2017/051214
(87) International publication number: WO 2017/191440

(56) References cited:
- EP-A1- 2 230 659
- EP-B1- 2 230 659
- WO-A2-2008/119142
- GB-A- 2 254 551
- KR-A- 20090 107 741
- KR-A- 20110 001 438
- US-A- 5 377 434

## Description

The present invention relates to a display unit and particularly, but not exclusively, to a standalone display unit capable of housing ancillary equipment, such as associated computers, communication equipment, sound equipment or the like. The invention may be particularly applicable to a freestanding display unit, or at least a display unit which is capable of being freestanding.

There is a requirement, particularly in the corporate market, to have ever larger displays which may comprise different display panels or display boards, for example multiple flat panel displays, interlinked flat panel displays to function as one display or combinations of different display types, such as flat panel displays and interactive whiteboards for example. These will normally require to be adjacent one another and these will typically require a significant quantity of associated components, such as computers and communication devices, which are often discreetly housed adjacent to the displays. Alternatively, appropriate cabling may be provided between the display and remotely located ancillary equipment.

At present, relatively large displays may be constructed on site and may be secured to a frame mounted on a convenient wall, which in some cases may be a purpose built partition or dummy wall. Alternatively they may be built on a frame which is arranged not to be visible from behind the display.

An advantage of the above type of displays is that they can be configured to a specific requirement.

A disadvantage of such displays is that they are relatively permanent and thus it is difficult to move them from one location to another. They also often require a conventional wall or partition to which they may be secured, making it difficult to install them in many locations in modern open plan offices, or even partitioned areas, particularly if the partitions are glass partitions.

As an alternative to the above type of displays, there are available a number of self-contained display units which can be mounted on a wall or a stand. However, these are typically "off the shelf" units and cannot easily be manufactured to a specific customer's requirements or be reconfigured.

Examples of known display panels are disclosed in patent documents KR 20110001438 A, EP 2230659 A1 and GB 2254551 A.

According to the present invention, there is provided a display unit as recited in claim 1.

A display unit in accordance with the present invention provides a unit where the peripheral frame may both provide an aesthetically pleasing housing for the various components of the display and also support those components in a manner which enables the display unit to be configured to a particular requirement. It may also permit the display unit to be assembled relatively easily using multiple common components and for the display unit to then be either mounted to a wall, stood against a wall or to be left freestanding, possibly with the aid of small stabilising legs or feet. This makes it convenient to "temporarily" install a display unit, for example at an exhibition or a conference, or to install it at any convenient location, for example across a corner of a room or against a glass partition, without the need to provide a false wall or the like on which to mount it.

All the above may be possible with the present invention by the peripheral frame both housing and supporting the display panels and ancillary components. This not only provides a neat structure in which any required computers or ancillary equipment can be housed, reducing to a minimum any external cabling, but the frame supporting the components within it enables the display unit to be freestanding or relatively simply mounted to a wall, for it is only necessary for the peripheral frame to be supported, either by standing on the floor or by being connected to an appropriate mounting on a wall.

With the present invention the components of the display unit, including the display panels, (which may be any type of visual display unit or visual display board), may be relatively easily configured within a frame constructed of only two basic component types. Furthermore, the peripheral frame enables the various components, such as speakers or rack mount pods for storing computers or communication equipment, to be mounted at any desired location within the peripheral frame. Also, because the peripheral frame may be constructed from only two component types, (straight extruded section and corner sections) a selection of components, for example one, two or three flat panel displays may be selected for a particular requirement and straight extruded section then cut to appropriate lengths to make the display unit the correct length to house the selected display panels. Other appropriate components, such as speakers or blanking panels, may then be selected both as necessary and to completed the display unit, to provide a compact aesthetically pleasing unit.

Preferably each straight extruded section has a substantially U-shaped cross section, with a substantially flat base portion and two side portions, wherein the inner face of the base portion has at least two extruded channel in it. The U-shaped cross section may both provide the display unit with a particularly pleasing aesthetic form, for example it may have bevelled outer edges and it may also enhance the rigidity of the peripheral frame. It may also permit flat panel displays or blanking panels to directly abut the edge of the peripheral frame, whilst still leaving a limited space for any mounting for attaching components to the extruded channels in the base portion of the straight extruded sections.

The provision of at least two extruded channels on the inner face of the base portion either enables a mounting for a component to be anchored at multiple transverses locations, at any position along the frame, or permits a mounting for a component to be anchored at a selected one of multiple transverse locations at any position along the straight extruded section. Three or more channels may be formed in the flat base portion of the straight extruded section.

Advantageously at least one and more preferably both of the inner faces of the side portions of the straight extruded sections have at least one channel therein. This may provide a particularly stable anchorage if a mounting for a component is anchored in both a channel in the inner face of the side portion and a channel in the inner face of the base portion, which channels, in profile, may be arranged perpendicular to each other. Alternatively a channel in the inner face of the side portion may provide a convenient anchorage for a mounting for a component which is to be mounted flush with a front edge of the peripheral frame.

Advantageously each corner section has a cross sectional profile having channels corresponding to the channels in the straight extruded sections, which channels are in register with the channels in the straight extruded sections when the peripheral frame is assembled. In this manner the channels in the straight extruded sections effectively extend through the corner sections, which corner sections may be formed from the same extruded section as the straight extruded sections, but which is curved.

The continuous channels through the corner sections both enables the said engaging members to be used to fix components to the corner sections and also enables the engaging members, if captive within the channels, to be slid from one extruded straight section to another extruded straight section, possibly with appropriate mountings for components already attached. This may be advantageous for appropriate mountings may be pre-assembled on one or more straight extruded sections and then these may be slid to an appropriate position once the peripheral frame has been assembled.

The straight extruded sections and corner sections, in cross section, may have a plurality of corresponding sets of holes for receiving respective dowels when the peripheral frame is assembled. This provides a convenient way of ensuring adjacent sections of the peripheral frame are in register and provides a strong joint between adjacent sections of the peripheral frame. It may also permit a bracing corner member to be used to connect the ends of adjacent extruded straight sections with a turnbuckle anchored at one end midway along the bracing section and at the other end to a respective corner section, to draw the corner section into the two straight extruded sections, thereby locking the sections together and bracing the corner at 90°, or at some other desired angle depending on the geometry of the corner section.

The channel engaging members may be T-slot nuts, which may be inserted into the channels and slid to a desired location.

In a simple form the peripheral frame may comprise four right angled corner sections and four extruded straight sections which together may make a square or rectangular peripheral frame.

The display unit may comprise at least one planar section with parallel front and rear faces wherein the peripheral frame forms a continuous edge around the planar section. This may provide a particularly pleasing appearance to the display unit.

The display unit may comprise two or more planar sections wherein at least two planar sections are angled relative to each other and wherein the peripheral frame is continuous about all the planar sections. An advantage of this arrangement is that display unit can be built to be freestanding because the angle between the two or more planar sections will maintain the display unit in an upright position. Where the peripheral frame comprises two adjacent straight extruded sections of these may be mitred where the two respective planar sections meet.

The peripheral frame is preferably continuous extending around the complete periphery of the display unit, for this will greatly increase the robustness of the peripheral frame.

Advantageously the display unit comprises a plurality of components of different types to be housed in and supported by said peripheral frame and a plurality of different types of mountings arranged to engage with the channel engaging members in appropriate channels and at appropriate locations along the channels to permit the different component types to be correctly located.

The display unit may comprise a plurality of internal frame members for supporting one or more display panels or other components within the peripheral frame, each internal frame member being arranged to be supported by and retained in place by the peripheral frame and arranged to engage, via appropriate mountings, with the channels in the peripheral frame. This permits components to extend, for example, halfway across the display unit and to be anchored at one edge to an internal frame member in the middle of the display unit, whilst still being supported by the peripheral frame by virtue of the frame member being supported by the peripheral frame.

Where there are internal frame members, these are preferably extruded and have extruded channels having the same cross section profile as the extruded channels in the peripheral frame. This permits the same channel engaging members, for example T-slot nuts, to be used with the internal frame members as are used with the peripheral frame and thus may also permit the same mountings to be used.

Advantageously the display unit may comprise a plurality of different types of components to be mounted in the display unit and a plurality of identical mountings arranged to engage with the channel engaging members to provide mountings for the components, wherein identical mountings may be used to mount different types of components to the peripheral frame. This standardisation of mountings and components makes it a relatively simple matter to reconfigure the display unit, or to build a particular display unit from standard components and mountings.

According to a second aspect of the present invention there is provided a display unit system comprising a number of identical display panels, straight extruded sections, corner sections and other sets of identical components, all arranged to be assembled into different display unit configurations as described above.

Several embodiments of the present invention will now be described, by way of example only, with reference to the accompanying drawings of which;
Figure 1 illustrates a single screen display unit in accordance with the present invention;
Figure 2 illustrates a dual screen display unit in accordance with the present invention;
Figure 3 illustrates an alternative dual screen unit in accordance with the present invention;
Figure 4 illustrates a six screen display unit in accordance with the present invention;
Figure 5 as a perspective view of a straight extruded section of the peripheral frame of the display units of Figures 1 to 4;
Figure 6 is a plan view of a corner section of a peripheral frame of the display units of Figures 1 to 4;
Figure 7 is a perspective view of the corner section of Figure 6;
Figure 8 is a second perspective view of the corner section of Figures 6 and 7;
Figure 9 is a perspective view of the corner sections of Figures 6 to 8 with a corner plate attached thereto;
Figure 10 is a perspective view showing two straight sections and a corner section of a peripheral frame of the display units of Figures 1 to 4 connected together and supporting additional internal frame components;
Figure 11 shows the corner section of Figures 6 to 8 attached to two straight sections of Figure 5 by a turnbuckle;
Figure 12 shows how a speaker housing and speaker panel may be attached to the straight extruded section of Figure 5; and
Figure 13 illustrates how a front glass panel may be attached by means of a back box to the peripheral frame of the display units of Figures 1 to 4.

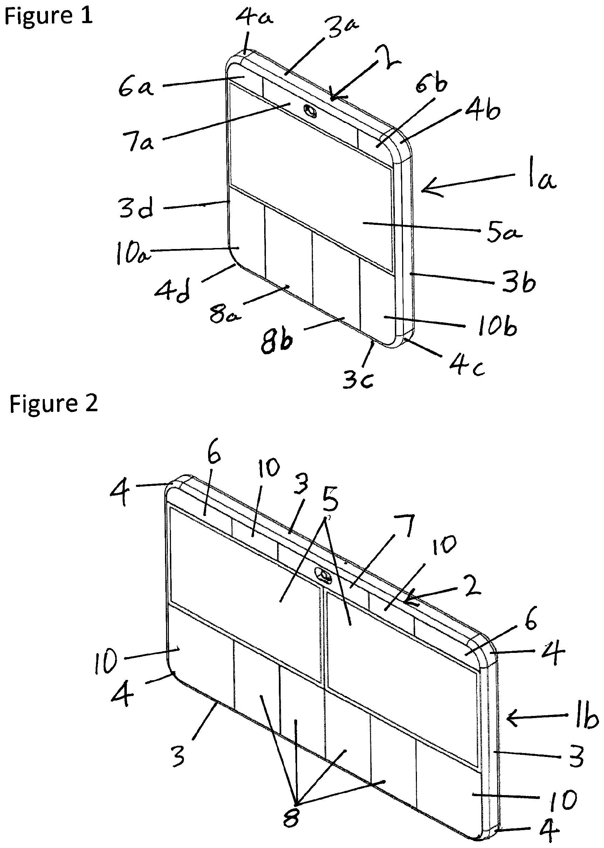

Referring now to Figure 1, there is illustrated a single screen display unit, indicated generally as 1a, in accordance with the present invention. This comprises an outer peripheral frame 2 made up of four straight extruded sections 3a to 3d and four curved extruded sections 4a to 4d.

In the peripheral frame 2 there is mounted a single flat panel display 5a, two speaker panels 6a and 6b, a camera panel 7a, two drop forward storage pins 8a and 8b for receiving electrical equipment such as computers and communications equipment associated with the display unit 1a and two glass blanking panels 10a and 10b.

As will be appreciated from a review of Figures 1 to 4, the various display units 1b to 1d are similar to that of Figure 1a, each comprising at least one flat panel display 5, a peripheral frame 2 made up of straight extruded sections 3, (in the case of display units 1c and 1d some of these are appropriately mitred to abut against adjoining straight extruded sections) a number of curved extruded sections 4 forming corners of the peripheral frames 2, blanking panels 10, a camera panel 7, speaker panels 6 and drop forward rack mount pods 8.

The different display units 1a to 1d, of Figures 1 to 4, may be constructed from at least some common components, such as mountings, curved extruded sections 4, flat panel displays 5, speaker panel 6, drop forward rack mount pods 8 and glass blanking panels 10. Also lengths of straight extruded sections may be cut to length to form the straight extruded sections of the peripheral frames of different display units 1a to 1d.

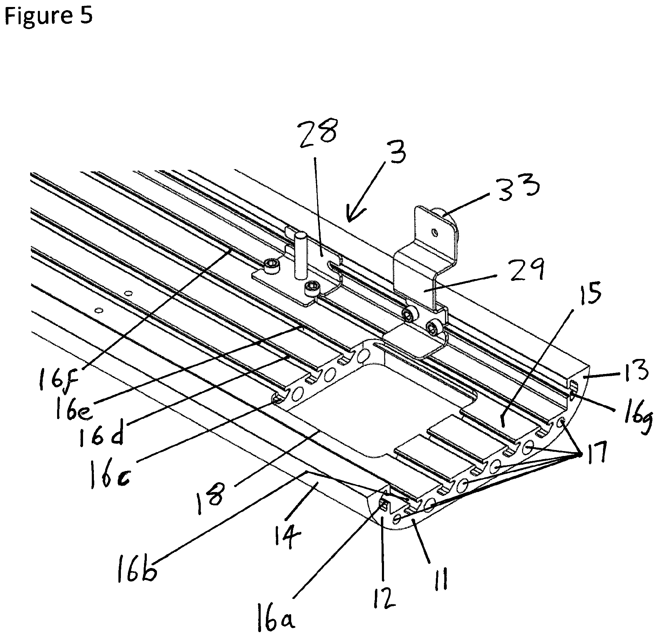

Referring now to Figure 5, here there is shown in perspective view of a straight extruded section 3 of the peripheral frame 2 of the display units 1a to 1d. The straight extruded section 3 is extruded from aluminium, but could be extruded from another metal or from a hard plastic.

The straight extruded section 3 comprises base portion 11 and two side portions 12 and 13, such that in profile the straight extruded section 3 is substantially U-shaped with a smooth outer face 14 and an inner face 15.

The extrusion profile is such that a number of channels 16a to 16g are defined in the inner face 15, both in the base portion 11 and in each side portion 12 and 13, each channel 16a to 16g having a narrow neck portion.

The straight extruded section 3 also has a number of circular openings 17 running through it.

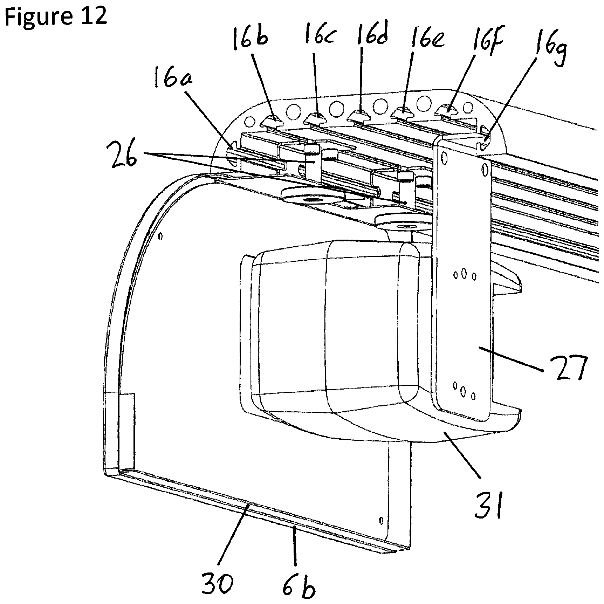

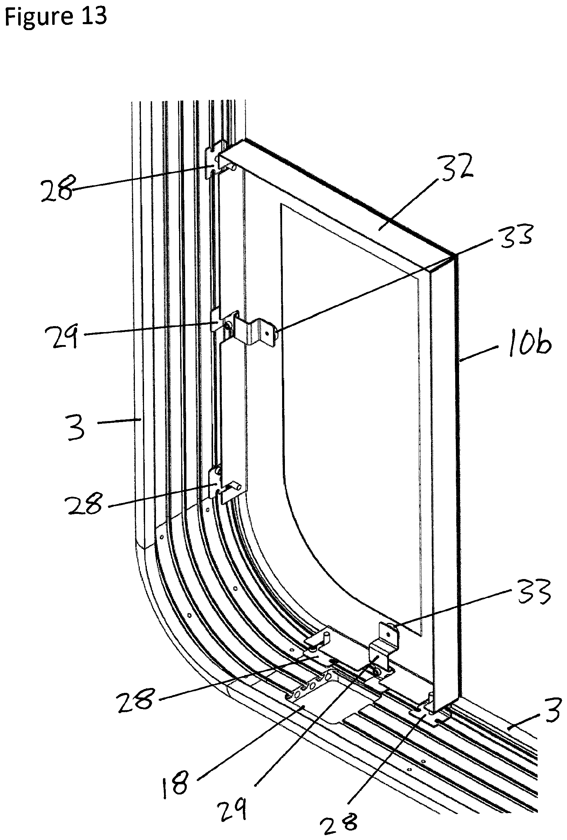

The straight extruded section 3 illustrated in Figure 5 is intended to be used as a bottom section of the peripheral frame 2 of one of the display units 1a to 1d and has an aperture 18 machined in it to provide an access for cabling into the display unit. Also mountings 29 and 30 are shown fixed to the straight extruded section 3 by T-slot nuts in appropriate ones of the channels 16a to 16g. These mountings 28 and 29 are described in greater detail below, with reference to Figures 12 and 13.

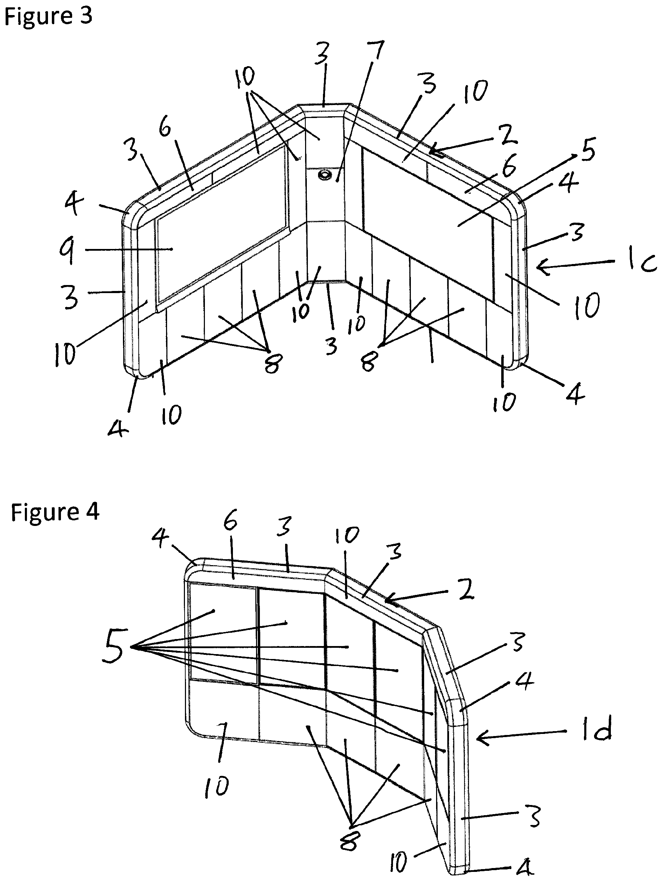

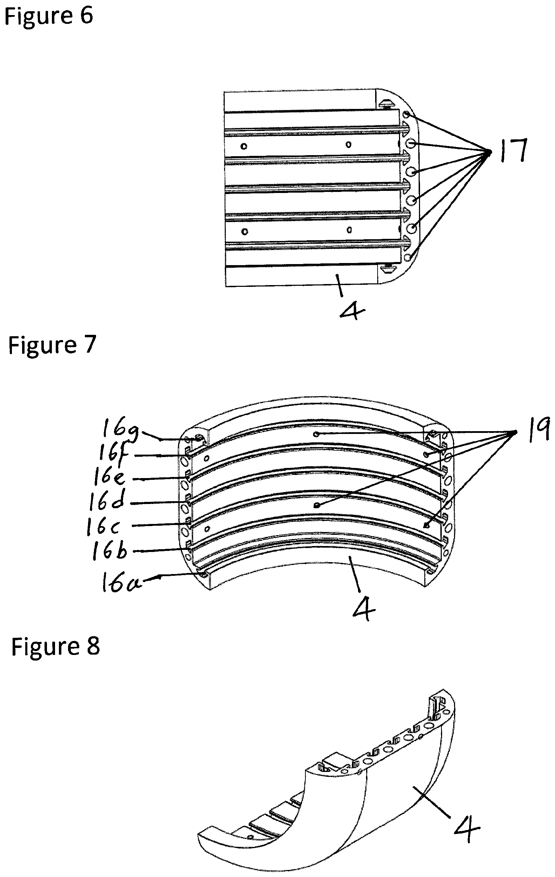

Referring to Figures 6 to 8, these illustrate various views of a curved extruded section 4 used to form the corners of the display units 1a to 1d. The curved extruded section 4 is formed from the same extrusion as that illustrated in Figure 3, but this has been cut to an appropriate length and subsequently curved. However, these could be manufactured by a different process, particularly they could be diecast.

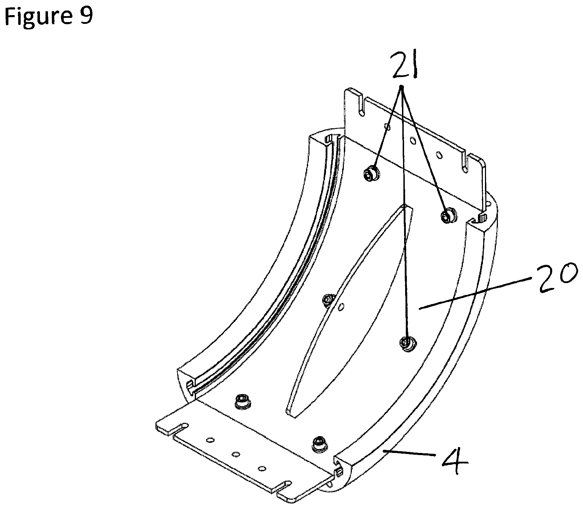

The curved extruded sections 4 have the same cross section profile as the straight extruded section illustrated in Figure 5 and the circular openings 17 may be used to accept dowels (not shown) to align adjacent straight and curved extruded sections (3, 4). Additionally the curved extruded section 4 has a number of holes 19 on an inner face thereof which, as seen in Figure 9, may be used to mount a corner plate 20 to an inner face of the curved extruded section 4, by means of fastenings 21.

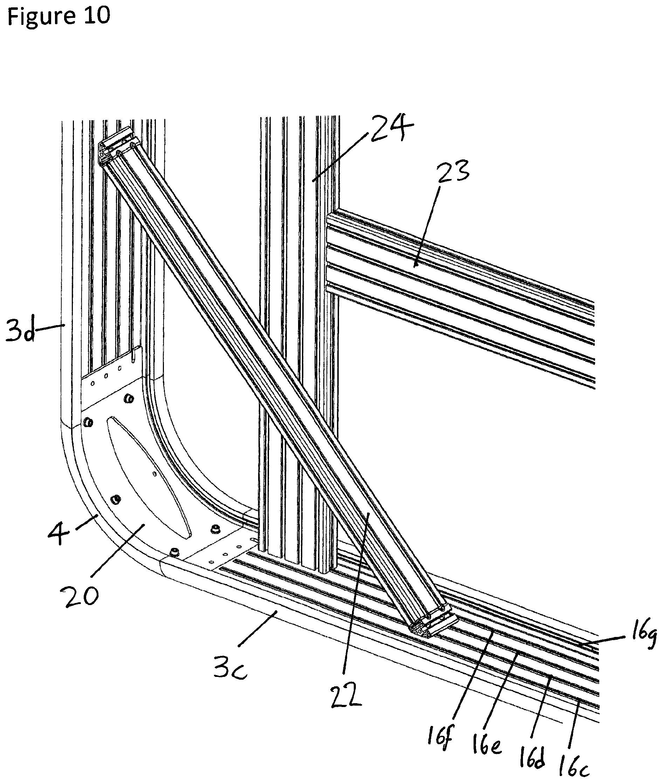

Referring now to Figure 10, this shows a section of the peripheral frame 2 of the display unit 1a of Figure 1, comprising two straight extruded sections 3c and 3d joined together by curved extruded section 4d having corner plate 20 secured to an inner face thereof. As previously described, but not seen in Figure 10, dowels are inserted in the circular openings 17 of the curved extruded section 4d, which dowels engage with corresponding circular opening 17 in the straight extruded sections 3c and 3d. Also the corner plate 20 extends over the inner faces 15 of respective straight extruded sections 3c and 3d and may be fixed thereto, if desired, by means of fastenings engaging with T-slot nuts pre-inserted and captive in appropriate ones of channels 16b to 16f. Identical captive T-slot nuts in channels 16d and 16c of both the straight extruded sections 3c and 3d may be used to a secure brace member 22.

As also seen from Figure 10 extruded internal frame members 23 and 24 may also be fixed and supported by the peripheral frame 2 and these may be attached in substantially any location by fastening them to appropriate T-slot nuts in an appropriate channel 16a to 16f at any desired location. In this manner an internal frame may be constructed to support the components mounted within the peripheral frame.

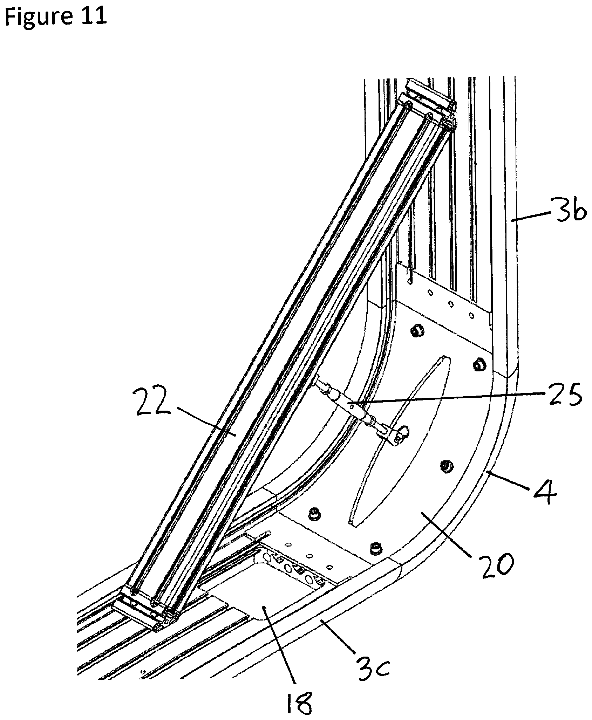

Referring now to Figure 11, this shows an alternative arrangement, where brace member 22 is attached by turnbuckle 25 to the corner plate 20 and thus to the curved extruded section 4. It will be appreciated that in this arrangement, tensioning of the turnbuckle pulls the corner section 4 into engagement with the straight extruded sections 3a and 3b, the adjacent sections of the peripheral frame 2 being retained in alignment by means of the dowels (not shown).

As will now be illustrated with reference to Figures 12 and 13 the channels 16a to 16g, (which as shown in Figure 13 may extend around the complete inner face of the peripheral frame 2), may be used to anchor mountings 26 to 29 for various components of the display units 1a to 1d.

Referring to Figure 12, this shows mountings 26, in the form of a location pins, being used to correctly locate a backing box 30 for a speaker panel 6a. Mounting 27 is used to mount speaker housing 31 and an associated speaker (not shown) behind the speaker panel 6a. Similarly, in Figure 13, mountings 28 are used to correctly position a backing box 32 of a glass blanking panel 10b of the display unit 1a of Figure 1. The backing box 32 is retained in place by means of magnets 33 on mountings 29.

As will be appreciated from Figures 12 and 13, a number of standard mountings may be used to mount different components of the display unit in any of a number of required locations, by the mountings being secured to one or more of the channels 16a to 16g at an appropriate location.

The invention has been described above, by way of example only, with reference to the accompanying Figures. However, it will be appreciated that many modifications may be made without departing from the scope of the invention as defined by the following claims.

## Claims

1. A display unit (1a) comprising one or more display panels (5a) and a peripheral frame (2) in which the one or more display panels (5a) are mounted and by which the one or more display panels (5a) are supported, wherein the peripheral frame (2) comprises a plurality of straight extruded sections (3a to 3d) and a plurality of corner sections (4a to 4d) linking the straight extruded sections (3a to 3d) together to form the peripheral frame (2), each straight extruded section (3a to 3d) having a main body portion defining a substantially flat and inflexible inward facing surface (15), in which surface a plurality of transversely spaced extruded channels (16b to 16f) are formed running longitudinally in a length direction of the straight extruded section, each channel (16b to 16f) in profile having a narrow neck portion and a wider main portion below the neck portion, the display unit (1a) further comprising a plurality of mountings (26, 27, 28, 29) for one or more components (30, 31) of the display unit (1a) to be supported by the peripheral frame (2), **characterised in that** the display unit further comprises a plurality of channel engaging members each arranged to be slotted into any one of the extruded channels (16b to 16f) to permit each channel engaging member to be placed in any desired transversely spaced channel and to slide along that channel to a desired longitudinal position, to anchor a mounting (26, 27, 28, 29) for a component (30, 31) of the display unit (1a) against the substantially flat and inflexible inward facing surface (15) at a desired longitudinal position and at more than one transverse location.

2. A display unit (1a) as claimed in claim 1 wherein the transverse profile of each straight extruded section (3a to 3d) is symmetrical about a longitudinal central plane of the extruded section.

3. A display unit (1a) as claimed in any preceding claim comprising at least three extruded channels (16b to 16f) in the inward facing surface, wherein adjacent pairs of said at least three extruded channels (16b to 16f) in the inward facing surface are equally spaced.

4. A display unit (1a) as claimed in any preceding claim wherein each straight extruded section (3a to 3d) has a substantially U-shaped cross-sectional profile, with a substantially flat base portion (15) and two side portions (12, 13).

5. A display unit (1a) as claimed in any preceding claim wherein at least the inner face of at least one side portion (12, 13) has at least one channel (16a, 16g) therein.

6. A display unit (1a) as claimed in any preceding claim wherein each corner section (4a to 4b) has a cross sectional profile having channels corresponding to the channels (16a to 16g) in the straight extruded sections (3a to 3d), which channels are in register with the channels in the straight extruded sections (3a to 3d) when the peripheral frame (2) is assembled.

7. A display unit (1a) as claimed in any preceding claim wherein the corner sections (4a to 4d) are formed by the being extruded.

8. A display unit (1a) as claimed in any preceding claim further comprising dowels engaging pairs of straight extruded section (3a to 3d) and adjacent corner sections (4a to 4d).

9. A display unit (1a) as claimed in any preceding claim wherein the straight section (3a to 3d) is solid in form apart from any extruded channels (16a to 16g) formed therein.

10. A display unit (1a) as claimed in any preceding claim wherein the channel engaging members are T-slot nuts.

11. A display unit (1a) as claimed in any preceding claim wherein the unit (1a) comprises at least one planar section with parallel front and rear faces, wherein the peripheral frame (2) forms a continuous edge around the planar section.

12. A display unit (1c) as claimed in any preceding claim wherein the unit (1c) comprises two or more planar sections wherein at least two planar sections are angled relative to each other and wherein the peripheral frame (2) is continuous about all the planar sections and comprising two adjacent straight extruded sections of the peripheral frame which are mitred where the two respective planar sections meet.

13. A display unit (1a) as claimed in any preceding claim comprising a plurality of components of different types to be housed in and supported by said peripheral frame (2) and a plurality of different types of mounting (26, 27, 28, 29) arranged to engage with the channel engaging members in appropriate channels (16a to 16g) and at appropriate portions along the channels (16a to 16g) to permit the different component types to be correctly located.

14. A display unit (1a) as claimed in any preceding claim further comprising a plurality of internal frame members (22, 23, 24) for supporting one or more display panels (5) or other components within the peripheral frame (2), each internal frame member (22, 23, 24) being arranged to be supported by and retained in place by the peripheral frame (2) and arranged to engage, via appropriate mounting, with the channels (16a to 16g) in the peripheral frame.

15. A display unit (1a) as claimed in claim 14 wherein the internal frame members (22, 23, 24) are extruded and have extruded channels having the same cross section profile as the extruded channels (16a to 16g) in the straight extruded sections (3a to 3d) of the peripheral frame (2).

## Patentansprüche

1. Anzeigeeinheit (1a), die ein oder mehrere Anzeigefelder (5a) und einen peripheren Rahmen (2) umfasst, in dem das eine oder mehrere Anzeigefelder (5a) montiert sind und durch den das eine oder mehrere Anzeigefelder (5a) gestützt werden, wobei der periphere Rahmen (2) eine Vielzahl geraden extrudierten Abschnitten (3a bis 3d) und eine Vielzahl von Eckabschnitten (4a bis 4d) umfasst, welche die geraden extrudierten Abschnitte (3a bis 3d) miteinander verbinden, um den peripheren Rahmen (2) zu bilden, wobei jeder gerade extrudierter Abschnitt (3a bis 3d) einen Hauptkörperteil aufweist, der eine wesentlich flache und unflexible nach innen gerichtete Oberfläche (15) definiert, in welcher Oberfläche eine Vielzahl von quer beabstandeten extrudierten Kanälen (16b bis 16f) gebildet sind, die longitudinal in einer Längsrichtung des geraden extrudierten Abschnitts verlaufen, jeder Kanal (16b bis 16f) im Profil einen engen Halsteil und einen breiteren Teil unterhalb des Halsteils aufweist, wobei die Anzeigeeinheit (1a) ferner eine Vielzahl von Halterungen (26, 27, 28, 29) für eine oder mehrere Komponenten (30, 31) der Anzeigeeinheit (1a) umfasst, die vom peripheren Rahmen (2) zu stützen sind, **dadurch gekennzeichnet, dass** die Anzeigeeinheit ferner eine Vielzahl von Kanäle in Eingriff bringender Elemente umfasst, jedes eingerichtet, in irgendeinen der extrudierten Kanäle (16b bis 16f) eingeschoben zu werden, um jedem Kanal in Eingriff bringenden Element zu ermöglichen, in irgendeinen quer beabstandeten Kanal platziert zu werden und jenem Kanal entlang in eine gewünschte longitudinale Position zu gleiten, um eine Halterung (26, 27, 28, 29) für eine Komponente (30, 31) der Anzeigeeinheit (1a) gegen die wesentlich flache unflexible nach innen gerichtete Oberfläche (15) in einer gewünschten longitudinalen Position und an mehr als einer quer laufenden Stelle zu verankern.

2. Anzeigeeinheit (1a) wie in Anspruch 1 beansprucht, wobei das Querprofil jedes geraden extrudierten Abschnitts (3a bis 3d) um eine longitudinale mittige Ebene des extrudierten Abschnitts symmetrisch ist.

3. Anzeigeeinheit (1a) wie in irgendeinem vorhergehenden Anspruch beansprucht, die zumindest drei extrudierte Kanäle (16b bis 16f) in der nach innen gerichteten Oberfläche umfasst, wobei benachbarte Paare der zumindest drei extrudierten Kanäle (16b bis 16f) in der nach innen gerichteten Oberfläche abstandsgleich sind.

4. Anzeigeeinheit (1a) wie in irgendeinem vorhergehenden Anspruch beansprucht, wobei jeder gerade extrudierte Abschnitt (3a bis 3d) ein wesentliches u-förmiges Querschnittsprofil mit einem wesentlich flachen Basisteil (15) und zwei Seitenteilen (12, 13) aufweist.

5. Anzeigeeinheit (1a) wie in irgendeinem vorhergehenden Anspruch beansprucht, wobei zumindest die Innenfläche des zumindest einen Seitenteils (12, 13) zumindest einen Kanal (16a, 16g) darin aufweist.

6. Anzeigeeinheit (1a) wie in irgendeinem vorhergehenden Anspruch beansprucht, wobei jeder Eckabschnitt (4a bis 4b) ein Querschnittsprofil mit Kanälen aufweist, die den Kanälen (16a bis 16g) in den gerade extrudierten Abschnitten (3a bis 3d) entsprechen, welche Kanäle in Deckung mit den Kanälen in den gerade extrudierten Abschnitten (3a bis 3d) sind, wenn der periphere Rahmen (2) zusammengebaut ist.

7. Anzeigeeinheit (1a) wie in irgendeinem vorhergehenden Anspruch beansprucht, wobei die Eckabschnitte (4a bis 4d) durch Extrudieren gebildet werden.

8. Anzeigeeinheit (1a) wie in irgendeinem vorhergehenden Anspruch beansprucht, die ferner Dübel umfasst, die Paare von gerade extrudierten Abschnitten (3a bis 3d) und benachbarte Eckabschnitte (4a bis 4d) in Eingriff bringen.

9. Anzeigeeinheit (1a) wie in irgendeinem vorhergehenden Anspruch beansprucht, wobei der gerade Abschnitt (3a bis 3d), abgesehen von irgendwelchen darin gebildeten Kanälen (16a bis 16g), massiver Form ist.

10. Anzeigeeinheit (1a) wie in irgendeinem vorhergehenden Anspruch beansprucht, wobei die Kanaleingriffselemente T-Nut-Muttern sind.

11. Anzeigeeinheit (1a) wie in irgendeinem vorhergehenden Anspruch beansprucht, wobei die Einheit (1a) zumindest einen ebenflächigen Abschnitt mit parallelen vorderen und hinteren Flächen umfasst, wobei der periphere Rahmen (2) eine kontinuierliche Kante um den ebenflächigen Abschnitt bildet.

12. Anzeigeeinheit (1c) wie in irgendeinem vorhergehenden Anspruch beansprucht, wobei die Einheit (1c) zwei oder mehrere ebenflächige Abschnitte umfasst, wobei zumindest zwei ebenflächige Abschnitte relativ zueinander winklig sind, und wobei der periphere Rahmen (2) über alle der ebenflächigen Abschnitte kontinuierlich ist und zwei benachbarte gerade extrudierte Abschnitte des peripheren Rahmens umfasst, die auf Gehrung geschnitten sind, wo zwei jeweilige ebenflächige Abschnitte zusammentreffen.

13. Anzeigeeinheit (1a) wie in irgendeinem vorhergehenden Anspruch beansprucht, die eine Vielzahl von Komponenten verschiedenen Typs, die im peripheren Rahmen (2) untergebracht und von diesem gestützt werden sollen und eine Vielzahl verschiedener Typen von Halterungen (26, 27, 28, 29) umfasst, die angeordnet sind, mit Kanaleingriffselementen in geeigneten Kanälen (16a bis 16g) und an geeigneten Abschnitten entlang der Kanäle (16a bis 16g) zu rasten, um den verschiedenen Komponententypen zu erlauben, korrekt verortet zu werden.

14. Anzeigeeinheit (1a) wie in irgendeinem vorhergehenden Anspruch beansprucht, die ferner eine Vielzahl von inneren Rahmenelementen (22, 23, 24) zum Stützen eines oder mehrerer Anzeigefelder (5) oder anderer Komponenten innerhalb des peripheren Rahmens (2) umfasst, wobei jedes innere Rahmenelement (22, 23, 24) eingerichtet ist vom peripheren Rahmen (2) gestützt und an Ort und Stelle gehalten zu werden und eingerichtet ist, über geeignete Halterung, mit den Kanälen (16a bis 16g) im peripheren Rahmen zu rasten.

15. Anzeigeeinheit (1a) wie in Anspruch 14 beansprucht, wobei die inneren Rahmenelemente (22, 23, 24) extrudiert sind und das gleiche Querschnittsprofil wie die extrudierten Kanäle (16a bis 16g) in den gerade extrudierten Abschnitten (3a bis 3d) des peripheren Rahmens (2) aufweisen.

## Revendications

1. Une unité d'affichage (1a) composée d'un ou plusieurs panneaux d'affichage (5a) et d'un cadre périphérique (2) dans lequel vient ou viennent se fixer le ou les panneaux d'affichage (5a) et offrant un soutien à un ou plusieurs panneaux d'affichage (5a), et ce cadre périphérique (2) comporte une pluralité de sections extrudées rectilignes (3a à 3d) ainsi qu'une pluralité de sections en coin (4a à 4d) qui relient les unes aux autres les sections extrudées rectilignes (3a à 3d) afin de former le cadre périphérique (2) ; chaque section extrudée rectiligne (3a à 3d) a une portion corps principal qui définit une surface qui est essentiellement plate, inflexible et dirigée vers l'intérieur (15) et cette surface comporte une pluralité de canaux extrudés transversaux (16b à 16f) qui sont implantés dans le sens longitudinal par rapport à la section extrudée rectiligne, et chaque canal (16b à 16f) a un profil présentant un col étroit et une partie principale plus large sous ce col ; en outre, cette unité d'affichage (1a) comporte une pluralité de fixations (26, 27, 28, 29) pour un ou plusieurs composants (30, 31) de l'unité d'affichage (1a) que doit soutenir le cadre périphérique (2), et **se caractérisant par le fait que** cette unité d'affichage comporte, en outre, une pluralité d'éléments en prise avec les canaux, et chacun d'entre eux est conçu pour s'insérer dans l'un des canaux extrudés (16b à 16f) afin que chaque élément en prise avec les canaux puisse se positionner dans n'importe quel canal souhaité dans le sens transversal et puisse coulisser le long de ce canal jusqu'à une position souhaitée dans le sens longitudinal, afin d'ancrer une fixation (26, 27, 28, 29) pour un composant (30, 31) de l'unité d'affichage (1a) contre la surface qui est essentiellement plate, inflexible et dirigée vers l'intérieur (15) à une position longitudinale souhaitée et à plus d'un emplacement transversal.

2. L'unité d'affichage (1a) que décrit la revendication 1, si ce n'est que le profil transversal de chaque section extrudée rectiligne (3a à 3d) est symétrique par rapport à un plan longitudinal central de la section extrudée.

3. L'unité d'affichage (1a) que décrit l'une ou l'autre des revendications précédentes, et qui comporte au moins trois canaux extrudés (16b à 16f) dans la surface dirigée vers l'intérieur, si ce n'est que des paires adjacentes desdits canaux extrudés, au nombre d'au moins trois (16b à 16f), dans la surface dirigée vers l'intérieur, sont équidistantes.

4. L'unité d'affichage (1a) que décrit l'une ou l'autre des revendications précédentes, si ce n'est que chaque section extrudée rectiligne (3a à 3d) a un profil en coupe essentiellement en forme de U, avec un socle essentiellement plat (15) et deux parties latérales (12, 13).

5. L'unité d'affichage (1a) que décrit l'une ou l'autre des revendications précédentes, si ce n'est qu'au moins la face interne d'au moins une partie latérale (12, 13) comporte au moins un canal (16a, 16g).

6. L'unité d'affichage (1a) que décrit l'une ou l'autre des revendications précédentes, si ce n'est que chaque section en coin (4a et 4b) a un profil en coupe qui a des canaux qui correspondent aux canaux (16a à 16g) des sections extrudées rectilignes (3a à 3d), et que ces canaux coïncident avec les canaux des sections extrudées rectilignes (3a à 3d) lorsque le cadre périphérique (2) a été assemblé.

7. L'unité d'affichage (1a) que décrit l'une ou l'autre des revendications précédentes, si ce n'est que les sections en coin (4a à 4d) sont formées par extrusion.

8. L'unité d'affichage (1a) que décrit l'une ou l'autre des revendications précédentes, si ce n'est qu'elle comporte, en outre, des chevilles qui viennent se mettre en prise dans des paires de sections extrudées rectilignes (3a à 3d) et des sections en coin adjacentes (4a à 4d).

9. L'unité d'affichage (1a) que décrit l'une ou l'autre des revendications précédentes, si ce n'est que les sections rectilignes (3a à 3d) ont un profil massif, en dehors de canaux extrudés éventuels (16a à 16g).

10. L'unité d'affichage (1a) que décrit l'une ou l'autre des revendications précédentes, si ce n'est que les éléments en prise avec les canaux sont des écrous à rainure en T.

11. L'unité d'affichage (1a) que décrit l'une ou l'autre des revendications précédentes, si ce n'est que cette unité (1a) comporte au moins une section plane avec des faces avant et arrière parallèles, et si ce n'est que le cadre périphérique (2) forme un rebord continu tout autour de cette section plane.

12. L'unité d'affichage (1c) que décrit l'une ou l'autre des revendications précédentes, si ce n'est que cette unité (1c) comporte au moins deux sections planes et si ce n'est qu'au moins deux sections planes font un angle l'une par rapport à l'autre et si ce n'est que le cadre périphérique (2) est continu par rapport à toutes les sections planes et comporte deux sections extrudées rectilignes adjacentes du cadre périphérique, qui sont assemblées par onglet au point de rencontre entre deux sections planes respectives.

13. L'unité d'affichage (1a) que décrit l'une ou l'autre des revendications précédentes, si ce n'est que qu'elle comporte une pluralité de composants de différents types qui sont implantés dans et soutenus par ledit cadre périphérique (2), ainsi qu'une pluralité de types différents de fixations (26, 27, 28, 29) qui sont positionnées de manière à se mettre en prise avec des éléments dans des canaux appropriés (16a à 16g) et au niveau de parties appropriées le long de ces canaux (16a à 16g) afin d'obtenir un positionnement correct de ces types différents de composants.

14. L'unité d'affichage (1a) que décrit l'une ou l'autre des revendications précédentes, si ce n'est qu'elle comporte, en outre, une pluralité d'éléments internes de cadre (22, 23, 24) qui soutiennent un ou plusieurs panneaux d'affichage (5) ou d'autres composants à l'intérieur du cadre périphérique (2), et que chaque élément interne du cadre (22, 23, 24) est disposé de manière à être soutenu et maintenu en place par le cadre périphérique (2) et à se mettre en prise, par le biais de fixations appropriées, avec les canaux (16a à 16g) dans le cadre périphérique.

15. L'unité d'affichage (1a) que décrit la revendication 14, si ce n'est que les éléments internes du cadre (22, 23, 24) sont extrudés et ont des canaux extrudés qui ont le même profil en coupe que les canaux extrudés (16a à 16g) dans les sections extrudées rectilignes (3a à 3d) du cadre périphérique (2).
